# EUROPEAN PATENT APPLICATION

(11) **EP 1 897 429 A1**
(43) Date of publication of application: **12.03.2008**
(21) Application number: 07115177.3
(22) Date of filing: 29.08.2007
(51) Int. Cl.: A01C 23/02

(54) **Device for the under surface incorporation of liquids into agricultured soil**

(30) Priority: 31.08.2006 IT MI20061664
(71) Applicant: ROTER ITALIA S.r.l., 46035 Ostiglia (MN) (IT)
(72) Inventor: Forigo, Sandro, 46035 Ostiglia (MN) (IT)
(74) Representative: Fisauli, Beatrice A. M.

(57) **Abstract**

This invention relates to a device designed to distribute liquid products precisely in agricultural land so that they are positioned in a layer situated a few centimetres below the surface, depending on the type of product to be sprayed, the crop, and the nature of the soil.

Said liquid products can contain weedkillers with an anti-sprouting action or other substances with a herbicidal, fungicidal, insecticidal, hormonal, fertilising or soil-conditioning action.

Said device is of the type fitted with a plurality of nozzles (6) positioned on support means (2) placed above the soil to be sprayed, which said nozzles spray said liquid substances on the soil while said support means, which are mounted on a towing machine, are moved above said soil. The device is characterised in that it includes first means (5a,5b,5c) designed to allow the advance of said nozzles (6) in said soil in such a way that said nozzles (6) spray said liquid substances directly below the surface of said soil, second means being fitted which are designed to regulate the vertical position of said nozzles (6) so as to regulate the depth at which said liquid substances are sprayed.

## Description

This invention relates to a device designed to distribute liquid products precisely in agricultural land so that they are positioned in a layer situated a few centimetres below the surface, depending on the type of product to be sprayed, the crop, and the nature of the soil.

Said liquid products can contain weedkillers with an anti-sprouting action or other substances with a herbicidal, fungicidal, insecticidal, hormonal, fertilising or soil-conditioning action.

Weedkilling treatment with substances having an anti-sprouting action, or treatment with substances that need to be incorporated at a precise depth, are traditionally performed in two stages: distribution on the surface of soil already tilled, conducted with conventional sprayers, and subsequent incorporation in the soil, performed with rotavators, rotary harrows or other conventional soil-tilling equipment, all of which are regulated so that they operate only in the first few centimetres of soil.

A first drawback of the known technique is that the quantities of substances sprayed far exceed those which are technically necessary, involving a considerable increase in cost and environmental impact. This is because the product is distributed on the soil surface, with the result that the substance sprayed is exposed to sunlight, high temperatures, and the convective movements of air and rain. The result (to different extents, depending on the sensitivity of the various active constituents) is volatilisation, deactivation, drifting or surface leaching of the substance, and a consequent loss of efficacy.

Moreover, the known technique does not allow the depth of distribution to be monitored, with the result that particular weedkillers with an anti-sprouting action which, in order to perform their action fully, must be placed in the layer of soil where weed seeds can germinate (at an approximate depth of between 20 and 60 mm) or where the development of the root apparatus of the crop is greatest (this layer varies, in terms of breadth and depth depending on the crop and the soil conditions), cannot be used.

Finally, it is very difficult to observe the required waiting times between distribution and incorporation. The conventional technique requires an interval between the distribution and burying of the substance which is only rarely as short as a few dozen minutes, and in many situations, due to problems associated with organisation of work or availability of resources, may be several hours.

In all the cases described, a significant part of the active constituent may be dispersed into the environment or deactivated, thus obliging the operators to increase the doses distributed (losses of up to 35% due to volatilisation have been recorded for some products). This problem becomes particularly critical in summer, because the volatility of the substances, especially weedkillers with an anti-sprouting action, increases with the temperature.

A second drawback relates to the impossibility of modifying the contour of the soil surface, as is required for many high-quality crops which need to be cultivated on ridges or in beds. The latter have to be formed after distribution of the product, causing uneven distribution in the soil and excessive burying of the active constituent (well below the germination layer of weed seeds). Cultivation on ridges is a useful technique for all vegetable and ornamental crops which remain in the field during periods of high rainfall.

A third drawback relates to the number of passes in the field (and consequently the time and total costs of the work): three passes (normal soil tilling, spraying of the soil surface and surface burying of the product) are required with the conventional technique, whereas it would be particularly useful to perform all three said operations in a single pass.

A fourth drawback relates to the location of the product in the ground, in both the vertical and the horizontal direction. In the first case the conventional technique obviously mixes the product in the tilled layer instead of depositing it at a precise depth. This means that a proportion of the product remains on the surface, and consequently, may be dispersed. In the second case it is difficult to distribute the product in strips, as would be convenient for crops that require hoeing, in which the action of the weedkiller could be limited to the row of crops only.

Finally, as the operators are forced to make further passes in areas already sprayed, where the products have already begun to evaporate, the effects on their health should not be overlooked.

The purpose of this invention is to solve said drawbacks with a device as claimed in claim 1, designed to distribute the substances in the soil, directly at the required depth and in the area where they are actually necessary. Said device is also designed to be coupled to different types of soil-tilling machines (rotavators, rotary harrows, and burying or stone-burying machines), provided that they have a suitable coupling, which said machines can leave the soil flat or be equipped with accessories designed to form ridges or beds.

The device according to the invention comprises a conventional sprayer to which a bar designed to distribute the product under the soil surface is connected. Said distributor bar consists of a bar connected to the rear of the chassis of the soil-tilling machine, upstream of any butt adjusters, compressors and trimmers which may be present.

The elements which support and protect the nozzles that distribute the liquid in the soil are constrained to the bar. The lower part of said elements is fitted with a fin which is horizontal in relation to the ground and orthogonal to the direction of advance of the machine. The fin is characterised by a wedge-shaped cross-section designed to house and protect the nozzles, a suitable number of which are positioned inside it. The number of nozzles is proportional to the width of the fin and the type of nozzle (ie. to the breadth of the distribution arc). The soil that exits from the tilling machine strikes the nozzle-carrying fin and partly covers it. In this way the product, which is distributed from the rear of the machine, is inserted directly into the soil.

The invention requires the product to be distributed over the entire tilled surface (flat cultivation), or in strips (flat or ridged cultivation). In the case of ridge formation, the distribution parts are located between two ploughshares integral with the soil-tilling machine, and in a position slightly retracted from them. The ploughshares convey the soil to a point where various devices (generally rollers driven by hydraulic motors with cones that shape the soil into ridges), also located downstream of the distribution bar, form the ridge. It is therefore possible to perform the treatment only on top of the ridge or on the top and both side walls of the ridge, depending on the shape of the nozzle-holding fin: horizontal in the first case; horizontal with two oblique side fins and downward-facing in the second case.

The entire spray bar can be regulated along the vertical axis in such a way as to vary the depth of distribution. Moreover, in order to improve the penetration of the distribution elements into the soil and to ensure that the soil surrounds the distributor fin with a continuous, uniform flow, the spray bar can be fitted with a vibrator, for example of the hydraulic unbalanced-mass type, which connected to the centre of the bar or in another position, and produces a rotational vibration.

The advantages deriving from the use of a device according to the invention are consequently an improvement of the effect of the substances distributed, due to their direct placing in the soil strata where they are to perform their action, thus avoiding, or at least reducing, deactivation or alteration of the active constituent caused by sunlight or high temperatures. The result is a reduction in cost and environmental impact, due to the reduction in volatilisation and in the quantities used, partly because the treatment substances only need to be distributed on the required areas.

Moreover, it is possible to form cultivation ridges, with a shape and size suitable for different crops (typically vegetables and ornamental plants).

Finally, soil tilling becomes more efficient and cheaper because the machine performs both spraying and ridge formation in a single pass; this is also advantageous to the health of the operator, who no longer has to pass over the treated soil again.

The invention will now be described according to a preferred embodiment, by way of example but not of limitation, with reference to the annexed figures, wherein:
- figures 1 (a, b, c) show three possible forms of a device for sub-surface incorporation of liquid substances in agricultural land according to the invention;
- figures 2 (a, b, c, d) show, according to three orthogonal views and a perspective view, the device according to the invention associated with a ridge-forming machine;
- figure 3 is an enlargement of figure 2a.

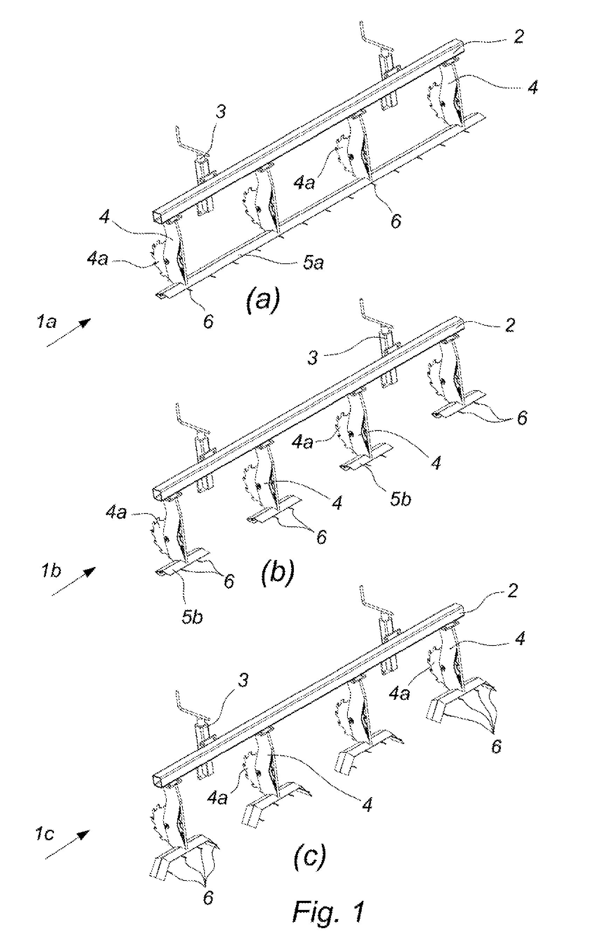

In figs. 1 (a, b, c), nos. (1a), (1b) and (1c) indicate a device for sub-surface incorporation of liquid substances in agricultural land, or spray bar, according to the invention. Each of said embodiments includes a support bar (2), which is regulated vertically by means of screw devices of known type (3) and connected by said devices to the machine with which it is used (not illustrated), such as a stone-burying or tilling machine, which prepares the soil for cultivation.

The lower part of said bar (2) is fitted with vertical blades (4), designed to break up the soil, which support horizontal fins with a wedge-shaped cross-section.

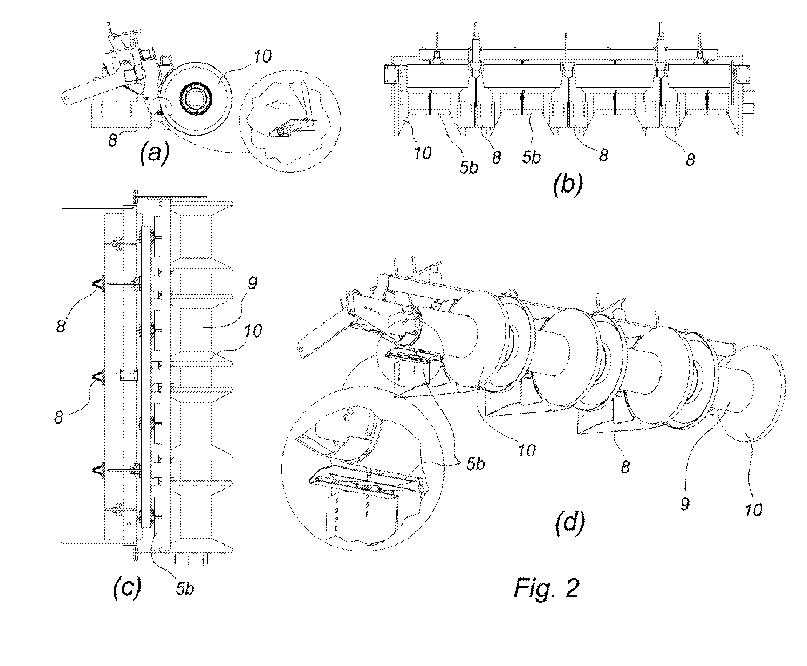

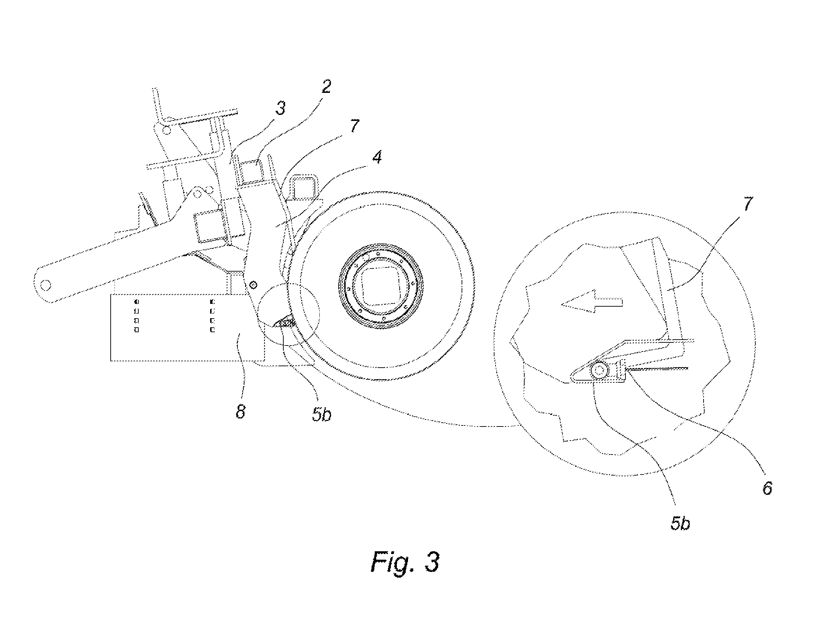

In the case of spray bar (1a), vertical blades (4) are connected to a single horizontal distributor fin (5a), with a length substantially equal to the width of the machine to which it is connected, which said distributor fin (5a) in turn supports a plurality of nozzles (6) that spray the treatment substance substantially uniformly on a strip of soil with a width equal to the length of distributor fin (5a). The position of nozzles (6) is shown in greater detail in figs. 2a and 3.

A spray bar of type (1 a) will then be connected to compacting devices suitable to form flat, even surfaces.

In the case of spray bar (1b), a short horizontal distributor fin (5b), fitted with at least one nozzle (6) and having a length substantially equal to the width of a ridge, is connected to each of vertical blades (4), so that it only sprays the strips of soil on which crops are to be grown.

Spray bar (1c) is an improved version of spray bar (1b), from which it differs in terms of the shape of horizontal distributor fins (5c), which have slanted portions facing downwards, so as to spray the sides of the ridge.

Spray bars of types (1 b) and (1 c) will then be connected to compacting devices suitable to form ridges, as explained in greater detail in the example below, which relates to a machine designed to perform spraying and simultaneous ridge formation.

Cogwheels (4a), which are caused to rotate by engaging with the soil while the towing machine advances, will advantageously be mounted on vertical blades (4), said cogwheels (4a) being designed to bury residues of earlier crops remaining in the field.

To improve the penetration of the distribution elements into the soil and to guarantee that the soil surrounds distributor fins (5a), (5b), (5c) with a continuous, uniform flow, the device according to the invention (1a), (1b), (1c) is advantageously fitted with a hydraulic unbalanced-mass vibrator (not illustrated), connected to the centre of support bar (2) or in another position, which produces a rotational vibration. Said hydraulic vibrator, being known in itself, will not be further described.

Fig. 2 shows the spray bar according to the invention coupled to a ridge-forming accessory, in order to illustrate the position taken up by said spray bar, while the soil-tilling machine is not illustrated. In the example described, the spray bar is type (1 b), namely with distributor fins (5b) designed to spray the top of the ridge, but not its sides. For ease of drawing, cogwheels (4a) have been omitted from the figure.

Figs. 2 (a, b, c, d) show the side view, front view, view from above and three-quarter view of the machine respectively.

The side view shown in fig. 2a, and the enlarged version thereof in fig. 3, illustrates said device (3) whereby the vertical position of said support bar (2) can be regulated in relation to the main machine and the ground. It also shows one of said vertical blades (4) which constrain one of the horizontal distributor fins (5b) to support bar (2).

Each of said distributor fins (5b) acts as support for one or more nozzles (6), which spray the liquid substance into the soil at the required depth, said depth being obtained by adjusting regulation devices (3), and said nozzles (6) being fed by tubes (7).

The side view also shows the position of horizontal distributor fins (5b) in relation to openers ploughshares (8), which open up the soil and identify the demarcation between the various ridges. The enlarged detail, which illustrates a cross-section of distributor fin (5b), shows the position of nozzle (6) and the characteristic wedge shape of distributor fin (5b) which enables it to penetrate into the flow of soil produced by the tilling machine.

The front view shown in fig. 2b illustrates the openers ploughshares (8), the number of which depends on the number of ridges to be formed.

In particular, two of said openers ploughshares (8) will be required if three ridges are to be formed, three for four ridges (as shown in fig. 2), four for five ridges, etc.. The ridges will be formed by a smooth rotary roller (9) on which ridge-shaped cones (10) are mounted, said smooth roller (9) being caused to rotate, for example, by a hydraulic motor.

As shown in fig. 2b, each of distributor fins (5b) is positioned alongside the smooth parts of roller (9) between two conical surfaces, so as to spray the upper parts of the ridges, while openers ploughshares (8) are positioned between the distributor fins.

The operation of the device according to the invention will be clear from the above description.

Distributor fins (5a), (5b), (5c) advance in the soil, towed by the machine to which they are coupled, said advance taking place at a depth regulated by devices (3). While the distributor fins advance in the soil, nozzles (6) spray the treatment substance, which will be concentrated in an area a few centimetres thick, situated at the depth considered most suitable to guarantee the efficacy of its action and minimise dispersion of the vapours into the atmosphere and spraying of areas where said substance would be superfluous.

Moreover, the fact that the device according to the invention can be coupled to soil-tilling and surface-finishing machines enables the work to be completed in a single pass.

The innovation has been described by way of example but not of limitation, according to a preferred form of embodiment. One skilled in the art could devise numerous other embodiments, all of which fall into the ambit of protection of the following claims.

## Claims

1. Device (1a, 1b, 1c) for sub-surface incorporation of liquid substances in agricultural land, of the type including a plurality of nozzles positioned on support means located above the soil to be sprayed, which said nozzles spray said liquid substances on the soil while said support means are moved above said soil, said support means being mounted on a towing machine, which said device is **characterised in that** it includes first means designed to allow the advance of said nozzles (6) in said soil in such a way that said nozzles (6) spray said liquid substances directly below the surface of said soil.

2. Device as claimed in claim 1, **characterised in that** it includes second means designed to regulate the vertical position of said nozzles (6), so as to regulate the depth at which said liquid substances are sprayed.

3. Device as claimed in claim 1, **characterised in that** said first means designed to allow the advance of said nozzles (6) in said soil, in such a way that said nozzles (6) spray said liquid substances directly below the surface of said soil, comprise one or more distributor fins (5a, 5b, 5c) which act as support for said nozzles (6), which said distributor fins (5a, 5b, 5c) are connected by blades (4) to said support means, which are mounted on said towing machine.

4. Device as claimed in claim 3, **characterised in that** said support means, mounted on said towing machine, comprise a support bar (2).

5. Device as claimed in claim 3, **characterised in that** said distributor fins (5a, 5b, 5c) are wedge shaped, so as to facilitate their advance in the soil, said nozzles (6) being positioned in the rear part of said fins (5a, 5b, 5c), so that said fins act as protection thereof.

6. Device as claimed in claims 3 to 5, **characterised in that** it includes a single distributor fin (5a) with a length substantially equal to the width of the towing machine.

7. Device as claimed in claims 3 to 5, **characterised in that** it includes a plurality of distributor fins (5b) with a length substantially equal to the width of a strip of soil to be sprayed.

8. Device as claimed in claims 3 to 5, **characterised in that** it includes a plurality of distributor fins (5c) with a length substantially equal to the width of a strip of soil to be sprayed, said fins (5c) having slanted portions facing downwards, so that parts of the soil with the same inclination can be sprayed.

9. Device as claimed in at least one of claims 1 to 8, **characterised in that** it includes means designed to cause the vibration of said spray bar (1 a, 1b, 1c) so as to improve the penetration into the soil of said distributor fins (5a), (5b), (5c) and to ensure that the soil surrounds said distributor fins (5a), (5b), (5c) with a continuous, uniform flow.

10. Device as claimed in claim 9, **characterised in that** said means designed to cause the vibration of said spray bar (1 a, 1 b, 1 c) comprise a hydraulic vibrator with unbalanced mass, connected to said spray bar (1a, 1b, 1c) so as to produce a rotational vibration.

11. Device as claimed in at least one of claims 1 to 10, **characterised in that** it includes a plurality of cogwheels (4a), mounted on said vertical blades (4) which are caused to rotate by engaging with the soil while the towing machine advances, which said cogwheels (4a) are designed to bury residues of earlier crops remaining in the field.
